Europäisches Patentamt

European Patent Office

Office européen des brevets

(19)

(11) Veröffentlichungsnummer : **0 192 041**
**B1**

(12) EUROPÄISCHE PATENTSCHRIFT

(45) Veröffentlichungstag der Patentschrift :
05.04.89

(51) Int. Cl.⁴ : **B 23 Q 11/08, F 16 P 3/12**

(21) Anmeldenummer : **86100486.9**

(22) Anmeldetag : **16.01.86**

(54) Kabine für Bearbeitungszentren.

(30) Priorität : **20.02.85 DE 3505875**

(43) Veröffentlichungstag der Anmeldung :
**27.08.86 Patentblatt 86/35**

(45) Bekanntmachung des Hinweises auf die Patenterteilung : **05.04.89 Patentblatt 89/14**

(84) Benannte Vertragsstaaten :
**CH DE FR IT LI**

(56) Entgegenhaltungen :
**BE--A-- 831 969**
**DE--A-- 2 427 287**
**DE--A-- 2 505 545**
**DE--A-- 2 741 557**
**DE--C-- 545 561**
**DE--C-- 888 067**
**DE--U-- 7 426 185**
**DE--U-- 8 412 399**

(73) Patentinhaber : **MAHO Aktiengesellschaft**
**Postfach 1280 Tiroler Strasse 85**
**D-8962 Pfronten (DE)**

(72) Erfinder : **Babel, Werner**
**Achweg 19**
**D-8962 Pfronten-Meilingen (DE)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

EP 0 192 041 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

Jouve, 18. rue St-Denis, 75001 Paris, France

## Beschreibung

Die Erfindung betrifft eine Kabine für Bearbeitungszentren der im Oberbegriff des Patentanspruchs 1 angegebenen Gattung.

Bearbeitungszentren zur programmgesteuerten spanabhebenden Bearbeitung von Werkstücken z. B. gemäß DE-U-8 412 399 weisen in der Regel eine Schutz- oder Sicherheitskabine auf, welche die eigentliche Werkzeugmaschine inklusive ihres Bearbeitungsbereiches sowie deren Zusatzaggregate, wie Werkzeugwechsler, Werkzeugmagazin usw., umgibt. Bei Bearbeitungszentren laufen die verschiedenen Bearbeitungsvorgänge und damit auch die Bewegungen des Werkstücktisches mit dem aufgespannten Werkstück und des Werkstückträgers entsprechend dem jeweiligen Steuerprogramm automatisch ab. Bei großvolumigen und/oder sperrigen Werkstücken, die seitlich über den Werkstücktisch hinausragen, kann es vorkommen, daß die programmbedingten horizontalen Fahrstrecken des Tisches größer als der freie Abstand der seitlichen Werkstückkanten zu den Seitenwänden der Werkstückkabine ist. In solchen Fällen ergeben sich dann während der Bearbeitung Kollisionen des Werkstückes mit der Kabinenwand, die zu Beschädigungen des einen oder anderen Bauteils oder auch des Vorschubantriebes für den Tisch führen können.

Aus der DE-U-7 426 185 ist eine Anlage zur spanabhebenden Bearbeitung von plattenförmigen Werkstücken im Durchlaufverfahren bekannt, die einen motorisch angetriebenen Endlosförderer für die Werkstücke und mehrere an diesem nebeneinander angeordnete Bearbeitungseinheiten enthält. Jede Bearbeitungseinheit ist von einem Schutzkasten umgeben, in dessen Seitenwänden je eine Öffnung für die Werkstückdurchführung vorgesehen ist. Die Größe dieser Durchführöffnung kann mittels eines Niederhalters stufenlos an die Abmessungen des jeweiligen Werkstücks angepaßt werden. An der Rückseite jedes Schutzkastens ist eine Klappe aus durchsichtigem Kunststoff angeordnet, die einen Einblick und einen Eingriff in den Bearbeitungsraum erlaubt. Im Bereich der Klappenaufhängung befindet sich ein Notaus-Schalter, der die Antriebsaggregate der Maschineneinheit abschaltet, sobald die Klappe von einer Bedienungsperson geöffnet wird. Eine ungenaue Einstellung der Niederhalter kann dazu führen, daß die durch die seitlichen Durchtrittsöffnungen bewegten Werkstücke mit den Niederhaltern kollidieren und dabei beschädigt werden.

Aufgabe der Erfindung ist es, eine Kabine für Bearbeitungszentren so auszubilden, daß derartige Beschädigungen durch Kollision des aufgespannten Werkstückes mit der Kabinenseitenwand vermieden werden.

Erfindungsgemäß wird diese Aufgabe durch die kennzeichnenden Merkmale des Patentanspruchs 1 gelöst.

Wenn während der Ausführung der verschiedenen Bearbeitungsvorgänge ein auf dem Werkstücktisch aufgespanntes sperriges Werkstück seitlich so weit verfahren wird, daß seine äußerste Kante gegen die Seitenwand stößt, wird diese Seitenwand durch diesen Stoß um einen vorgegebenen Betrag lateral ausgelenkt und betätigt dabei den Notaus-Schalter, der in Form eines gebräuchlichen Druckschalters ausgebildet sein kann. Der Auslenkmechanismus des Seitenwandteils kann so ausgelegt und dimensioniert werden, daß durch das Anstoßen des Werkstückes an dem Seitenwandteil weder das eine noch das andere Bauteil beschädigt wird.

Je nach der Größe und dem Typ des Bearbeitungszentrums können die auslenkbaren Seitenwandteile sich nach Art von Schiebetüren über die gesamte Kabinenhöhe erstrecken oder sie können auch als schwenk- oder kippbare Fenster ausgebildet sein. Die letztere Ausführung empfiehlt sich bei Schutzkabinen mit fest angebauten Seitenwänden, welche durch derartige Fenster seitliche Beobachtungen des Arbeitsbereichs der Maschine gestatten.

Eine zweckmäßige Ausgestaltung der Erfindung zeichnet sich dadurch aus, daß die Seitenwandteile an einer oberen ortsfesten horizontalen Führungsschiene seitlich am Ständer geführt sind, wobei diese Führungsschienen ein C-förmiges Profil haben, welches ein Herausdrücken der Laufrollen mit doppelt-konischer Lauffläche beim Anstoßen eines Werkstückes an diesem Seitenwandteil verhindert. Vorteilhaft sind die Lagerzapfen dieser doppelt-konischen Laufrollen über elastisch nachgiebige Elemente am oberen Endabschnitt des jeweiligen Seitenwandteils befestigt, so daß beim Anstoßen eines Werkstückes das obere Seitenwandteil ausschwenken kann, ohne daß die Laufrollen aus der ortsfesten horizontalen Führungsschiene herausgedrückt werden. Die Druckschalter sind zweckmäßig am Längsträger der Führungschiene befestigt und werden beim Ausschwenken der Seitenwand durch entsprechende Stößel betätigt. Sie können jedoch auch an der Seitenwand befestigt sein und mit ihren Schaltstößeln gegen eine ortsfeste Leiste wirken.

Statt der Federelemente (Blattfedern) können die Lagerzapfen der Laufrollen auch über Schwenkhebel mit dem Seitenwandteil verbunden sein, wodurch sich bei einfacher Ausbildung eine verbesserte Stabilität in der ausgestellten Position ergibt und auch der Ausstellweg durch entsprechende Wahl der Hebellänge vergrößert werden kann. Die Schwenkhebel können Gelenkhebel, Scherenhebel od. dgl. sein.

Die elastischen Elemente können in Form von Druckfedern die Laufrollenzapfen umgeben oder als Federlaschen ausgebildet sein, die einerseits an der Seitenwand und andererseits am Laufrollenzapfen befestigt sind.

Im folgenden werden bevorzugte Ausführungsbeispiele der Erfindung anhand der Zeichnung im einzelnen beschrieben. Es zeigen :

Fig. 1 schematisch ein Bearbeitungszentrum in Vorderansicht ohne Stirnwand ;

Fig. 2 die Aufhängung einer Seitenwand in vergrößertem Vertikalschnitt-Einzelheit A in Fig. 1 ;

Fig. 3 eine andere Ausführung der Erfindung für ortsfeste Seitenwände im vergrößerten Vertikalschnitt-Einzelheit B in Fig. 1 ;

Fig. 4, 5 weitere Ausführungen einer Seitenwand-Aufhängung in Draufsicht auf die Kabine.

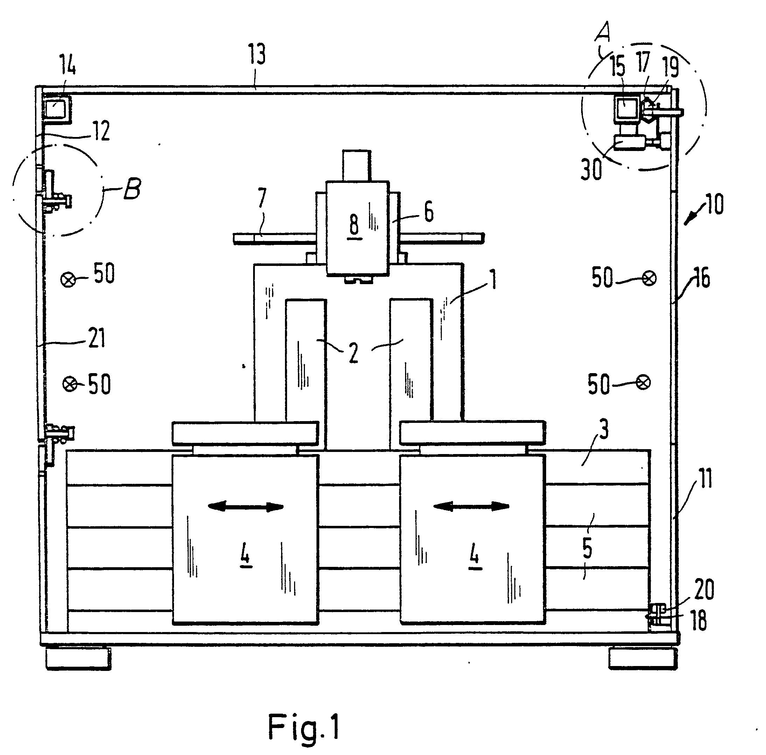

Das in Fig. 1 dargestellte Bearbeitungszentrum enthält einen Maschinenständer 1, an dessen Stirnseite über Vertikalführungen 2 eine Konsole 3 vertikal verfahrbar angeordnet ist. Diese Konsole 3 trägt einen Werkstücktisch 4, der über nicht dargestellte Antriebe seitlich verfahrbar an der Konsole 3 gehalten ist. Auf der Oberseite des Ständers 1 ist ein Spindelstock 5 in Horizontalführungen 6 verfahrbar angeordnet, auf dessen Oberseite ein Werkzeugmagazin 7 und an dessen Stirnseite ein Vertikalfräskopf 8 montiert sind. Die Werkzeugmaschine befindet sich in einer Schutzkabine 10, die aus zwei Seitenwänden 11, 12, einer — in Fig. 1 nicht dargestellten — mehrteiligen Stirnwand, aus einer Deckplatte 13 und aus einem Rahmengerüst besteht, von dem in Fig. 1 nur zwei obere Träger 14, 15 dargestellt sind.

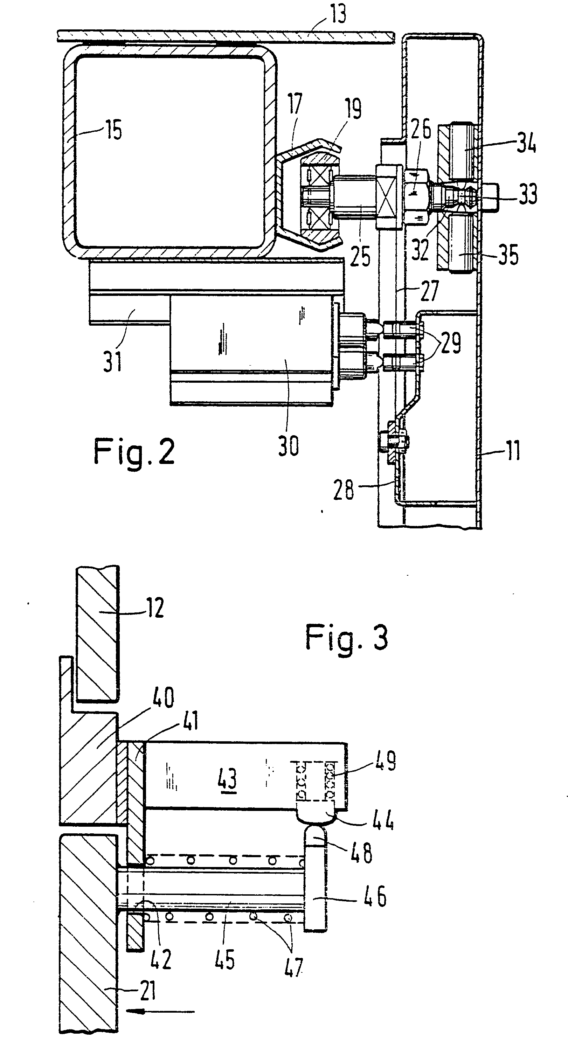

In Fig. 1 ist die rechte Seitenwand 11 in Form einer sich über die gesamte Kabinenhöhe erstreckenden Schiebetür mit einem Fenster 16 ausgebildet und kann zur vollständigen Freigabe des Arbeitsbereiches in einer oberen als C-Profil ausgebildeten Führungsschiene 17 und an einer unteren Führungsschiene 18 mittels Laufrollen 19, 20 horizontal verfahren werden. Die Einzelheiten dieser Ausführung sind in Fig. 2 vergrößert dargestellt. Die in Fig. 1 rechte Seitenwand 12 der Schutzkabine 10 ist am oberen Träger 14 und auf einem unteren Querträger fest montiert und weist in der Höhe des Arbeitsbereiches ein Klapp- oder Schiebefenster 21 auf, dessen Scheibe in der in Fig. 3 dargestellten Weise gegenüber dem Fensterrahmen seitlich durch ein anstoßendes Werkstück auslenkbar befestigt ist und dabei Notaus-Schalter betätigt.

Wie aus Fig. 2 ersichtlich, hat die am oberen Längsträger 15 befestigte horizontale Führungsschiene 17 ein C-Profil. In dieser Führungsschiene 17 laufen mindestens zwei Führungsrollen 19, deren doppelt-konische Form dem Führungsschienenprofil angepaßt ist und ein Herausgleiten in Axialrichtung ihres Lagerzapfens 25 verhindert. Jeder Lagerzapfen 25 der Laufrollen 19, von denen mindestens zwei mit horizontalem Zwischenabstand vorgesehen sind, ist über eine Schraubverbindung 26 am oberen Teil einer Blattfeder 27 befestigt. An ihrem unteren Ende ist die Blattfeder 27 mit einer Profilstrebe 28 z. B. durch Nieten, Schrauben oder Schweißen fest verbunden, an welcher zwei Druckstücke 29 zur Betätigung von Notaus-Schaltern 30 befestigt sind. Diese Notaus-Schalter 30 sind mittels einer Tragleiste 31 an der Unterseite des Trägers 15 angeschraubt. Wie dargestellt, weist der Lagerzapfen 25 in einem schmaleren Endabschnitt 32 eine Ringnut 33 auf, in welche die abgerundeten Köpfe von zwei Druckstücken 34, 35 eingreifen, die unter Federkraft stehen und mit ihren Gehäusen an der Innenseite der Seitenwand 10 befestigt sind.

Wenn ein auskragendes Werkstück durch zu weites horizontales Verfahren des Werkstücktisches 4 gegen die Seitenwand 10 stößt, kann diese Seitenwand aufgrund der in Fig. 2 dargestellten oberen Aufhängung ausschwenken, da die Laufrolle 20 an ihrem unteren Ende an einer vertikalen Führungsfläche 18 läuft. Bei einer derartigen Ausschwenkbewegung wird unter elastischer Verformung der Blattfedern 27 auch der obere Endteil der Seitenwand 10 seitlich bewegt, was eine entsprechende Betätigung der Notaus-Schalter 30 durch die Druckstifte 29 zur Folge hat. Gleichzeitig gleiten die abgerundeten Köpfe der federnd abgestützten Druckstücke 34, 35 aus der balligen Nut 33 heraus.

Fig. 3 ist ein vergrößerter Ausschnitt B in Fig. 1 und zeigt eine Ausführung, bei welcher die Seitenwand 12 der Kabine fest und unbeweglich montiert ist und eine Schwenk- oder Schiebetür mit einem Fenster 21 aufweist. Am Türrahmen 40 ist innenseitig ein Flacheisen 41 befestigt, das in den Fensterausschnitt vorsteht und in diesem vorstehenden Teil Öffnungen 42 aufweist. Direkt am Profileisen oder auch am Rahmen ist mindestens ein Schalter 43 mit einem quer vorstehenden federbelasteten Druckstück 44 befestigt. An der Innenseite des Fensters 21 sind in seinem Randabschnitt Zapfen 45 mit verbreitertem Kopf 46 dauerhaft befestigt, die von einer sich mit einem Ende am Flacheisen 41 und mit dem anderen Ende am verbreiterten Kopf 46 abstützenden Druckfeder 47 umgeben sind. Die Zapfen 45 durchragen lose die entsprechenden Bohrungen 42 im Flacheisen 41. An mindestens einem Kopf 46 ist seitlich ein Ansatz 48 ausgebildet, der mit dem balligen Kopf des Druckstückes 44 zusammenwirkt.

Wenn ein Werkstück während eines Bearbeitungsvorganges oder bei einem Palettenwechsel seitlich so weit verfahren wird, daß seine auskragenden Teile gegen das Fenster 21 stoßen, wird dieses gegenüber der in Fig. 3 dargestellten Stellung seitlich nach außen — in Fig. 3 nach links — gedrückt, wobei der Zapfen 45 unter Zusammendrücken der Feder 47 mitgenommen wird und sich in der Bohrung 42 des Flacheisens verschiebt. Dabei gelangt der Ansatz 48 außer Kontakt vom balligen Kopf des Druckstückes 44, welches unter der Kraft seiner Feder 49 um einen vorgegebenen Betrag herausgeschoben wird und dabei den Notaus-Schalter 43 betätigt, welcher dann den Vorschubantrieb für den einen oder anderen Arbeitstisch 4 abschaltet.

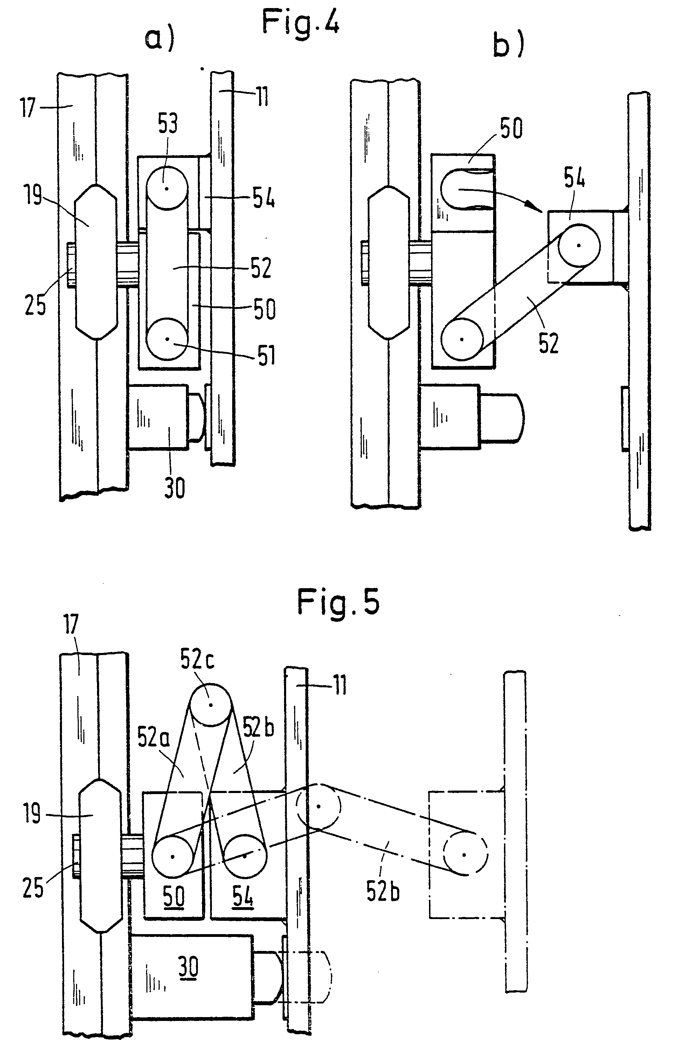

Bei der in Fig. 4 schematisch in Draufsicht dargestellten Ausführung sind die Lagerzapfen 25 der in den C-Profilschienen 17 geführten Laufrollen 19 an Lagerböcken 50 befestigt. An einem Endteil jedes Lagerbocks 50 ist ein Maul mit einem Feder-Schnapper und am anderen Ende ein vertikaler Scharnierbolzen 51 angeordnet, der auf einem Teil seiner Länge mit einem Schwenkhebel 52 drehfest verbunden ist. Das andere Ende des Schwenkhebels 52 greift an einem Gelenkbolzen 53 an, welcher in einer am Wandteil 11 innen befestigten Halterung 54 gelagert ist. Die dargestellte Wandhalterung bildet somit ein sog. Doppel-Scharnier und bewirkt bei Ausstoßen eines Werkstückes eine seitliche Auslenkbewegung des Wandteils 11 aus der Normalstellung nach Fig. 4a in die seitlich versetzte Lage gemäß Fig. 4b, in welcher die Not-Aus-Schalter 30 durch Freigabe ihrer Stößel betätigt und damit der Antrieb des Werkstücktisches — oder auch die Stromversorgung der gesamten Werkzeugmaschine — abgeschaltet ist.

Die in Fig. 5 schematisch dargestellte Ausführung entspricht in ihrem Funktionsprinzip und auch im konstruktiven Aufbau in etwa der Seitenwand-Halterung nach Fig. 4. Wie in den vorhergehend beschriebenen Figuren sind auch hier gleiche Bauteile mit den gleichen Bezugszeichen versehen. An der Innenseite des Wandteils 11 sind stabile Halterungen 54 befestigt, in denen Gelenkbolzen 53 aufgenommen sind. Statt eines einzigen Schwenkhebels 52 sind jedoch zwei Schwenkarme 52a, 52b in Form eines Kniehebel-Gelenks vorgesehen. Diese Ausführung benötigt zwar einen zusätzlichen Scharnierbolzen 53a ; sie hat jedoch den Vorzug größerer Austellwege der Wandteile 11, 12 aus der mit durchgezogenen Linien dargestellten linken Stellung in die strichpunktiert dargestellte rechte Position ohne gleichzeitige Bewegung der Seitenwandteile 11 in Längsrichtung, wie das bei der Halterung nach Fig. 4a, b zwangsläufig der Fall ist.

Die in den Fig. 2, 4 und 5 dargestellten Seitenwand-Halterungen können bei Verwendung entsprechend profilierter Führungsschienen auch am unteren Rand der Seitenwandteile vorgesehen sein.

Die Erfindung ist nicht auf die vorstehend beschriebenen Ausführungen beschränkt. So können die Notaus-Schalter auch in anderer Weise angeordnet werden, so lange sie nur durch die Ausstellbewegung des Seitenwandteiles und/oder der Tür betätigt werden und den Vorschubantrieb möglichst verzögerungsfrei abschalten. Statt der rein mechanischen Druckschalter können auch andere Schaltungsanordnungen mit z. B. photoelektrischen Sensoren eingesetzt werden, welche im Innenraum mit geringem Abstand vor den Seitenwänden angeordnet und aktiviert werden, sobald ein Werkstück den Lichtstrahl unterbricht. In Fig. 1 sind jeweils zwei Photozellen 50 im Anfahrbereich jeder Seitenwand dargestellt.

## Patentansprüche

1. Kabine für Bearbeitungszentren, bestehend aus einer in Führungen horizontal verschiebbaren vorderen Stirnwand und aus an den Ständerseiten angeordneten Seitenwänden (11, 12), welche den vom Bewegungsbereich des Werkstücktisches (4) bestimmten Arbeitsraum seitlich abschirmen, wobei in der Bewegungsbahn der jeweils beweglichen Kabinenwände (11, 12) Notaus-Schalter vorgesehen sind, die beim Öffnen einer Kabinenwand die Antriebsaggregate der Werkzeugmaschine stillsetzen, dadurch gekennzeichnet, daß zumindest Teile der Seitenwände (11, 12) zur Erzielung einer beschränkten lateralen Nachgiebigkeit an elastisch nachgiebigen Elementen (27 ; 47) bzw. an Schwenkhebeln (52) gehalten sind, und daß gesonderte Notaus-Schalter (18, 30, 49) vorgesehen sind, die bei einer durch Kollision mit einem aufgespannten Werkstück verursachten lateralen Ausstellbewegung eines Seitenwandteils (11, 12 ; 21) den Vorschubantrieb des Werkstücktischs (4) stillsetzen.

2. Kabine nach Anspruch 1, bei welcher Teile der Kabinenwände durch Fenster gebildet sind, dadurch gekennzeichnet, daß die Fenster (21) durch die elastisch nachgiebigen Elemente (47) am restlichen Teil der Seitenwand (11 ; 12) gehaltert sind.

3. Kabine nach Anspruch 1, dadurch gekennzeichnet, daß an jeder Seite eine obere horizontale Führungsschiene (17) von C-Profil befestigt ist, in der mindestens zwei horizontal beabstandete doppelt-konische Laufrollen (19) geführt sind, deren Lagerzapfen (25) über die elastisch nachgiebigen Elemente (27) am oberen Endabschnitt der jeweiligen Seitenwand (10, 11) gegenüber dieser axial beweglich angeordnet sind.

4. Kabine nach Anspruch 3, dadurch gekennzeichnet, daß mehrere Druckschalter (30) am Träger (15) der Führungsschiene (17) befestigt sind, denen je ein am oberen Abschnitt der begrenzt pendelnd aufgehängten Seitenwand (11) befestigter Stößel (29) zugeordnet ist.

5. Kabine nach Anspruch 3 oder 4, dadurch gekennzeichnet, daß jeder Laufrollen-Zapfen (25) über eine Federlasche (27) als elastisches Element an der Seitenwand (10, 11) befestigt ist.

6. Kabine nach einem der Ansprüche 3 bis 5, dadurch gekennzeichnet, daß jeder Laufrollen-Zapfen (25) eine ballige Ringnut (33) aufweist, in welche an der Seitenwand (10, 11) befestigte Druckstifte (34, 35) mit abgerundetem Kopf federnd eingreifen.

7. Kabine nach einem der Ansprüche 3 bis 6, dadurch gekennzeichnet, daß am unteren Rand der Seitenwand (10, 11) mindestens zwei Laufrollen (20) mit vertikalen Lagerzapfen vorgesehen sind.

8. Kabine nach Anspruch 7, dadurch gekennzeichnet, daß die Laufrollen-Zapfen (25) in Lagerböcken (50) befestigt sind, in denen ein Drehbolzen gelagert ist, und daß der Schwenkhebel (52) einerseits mit diesem Drehbolzen und andererseits mit einem vom Wandteil (11) gehalterten Gelenkbolzen verbunden ist.

9. Kabine nach Anspruch 1 oder 8, dadurch gekennzeichnet, daß die Schwenkhebel als Kniegelenk-Hebel (52a, 52b) ausgeführt sind.

## Claims

1. Cabin for machining centres, comprising
a front end wall horizontally movable within guide means and
sidewalls (11, 12) disposed on the sides of the column for laterally shielding the working space defined by the range of movement of the work table (4),
wherein in the path of movement of the respective movable cabin walls (11, 12) there are provided emergency stop switches which stop the drive means of the machine tool when a cabin wall is opened,
characterised in
that at least parts of the sidewalls (11, 12) are mounted on elastically compliant elements (27; 47) or turning levers (52), respectively, so as to achieve a limited lateral compliance, and
that separate emergency stop switches (18, 30, 49) are provided which stop the feed drive means for the worktable (4) when a sidewall member (11, 12; 21) is deflected laterally due to collision with a clamped workpiece.

2. Cabin as claimed in claim 1, in which parts of the cabin walls are constituted by windows, characterised in that the windows (21) are supported by the elastically compliant elements (47) on the remaining part of the sidewall (11; 12).

3. Cabin as claimed in claim 1, characterised in that on either side there is mounted an upper horizontal C-section guide rail (17) in which at least two horizontally spaced double-cone rollers (19) are guided, the journals (25) of said rollers being disposed via the elastically compliant elements (27) at the upper end portion of the respective sidewall (10, 11) for axial movement relative thereto.

4. Cabin as claimed in claim 3, characterised in that plural pressure switches (30) are secured to the support (15) of the guide rail (17), each pressure switch having a plunger (29) cooperating therewith which is secured on the upper portion of the sidewall (11) that is mounted for limited pendulous movement.

5. Cabin as claimed in claim 3 or claim 4, characterised in that each roller journal (25) is mounted on the sidewall (10, 11) by way of a spring shackle (27) as the resilient element.

6. Cabin as claimed in any one of the claims 3 to 5, characterised in that each roller journal (25) is formed with a spherical annular groove (33) in which pressure pins (34, 35) engage resiliently, said pressure pins being secured on the sidewall (10, 11) and having round heads.

7. Cabin as claimed in any one of the claims 3 to 6, characterised in that at least two rollers (20) with vertical journals are provided on the bottoam edge of the sidewall (10, 11).

8. Cabin as claimed in claim 7, characterised in that the roller journals (25) are mounted in bearing blocks (50) in which a pintle is supported, and that one side of the turning lever (52) is connected to said pintle while the other side is connected to a pivot supported by the wall member (11).

9. Cabin as claimed in claim 1 or claim 8, characterised in that the turning levers are toggle levers (52a, 52b).

## Revendications

1. Cabine pour centres d'usinage, composée
d'une paroi frontale avant, qui peut se déplacer par translation dans la direction horizontale dans des guides, et
de parois latérales (11, 12) montées le long des côtés du bâti, et qui protègent latéralement la zone de travail définie par la zone de déplacement de la table porte-pièce (4),
dans laquelle il est prévu, sur le trajet de déplacement des parois mobiles (11, 12) de la cabine, des interrupteurs d'arrêt d'urgence qui mettent les groupes d'entraînement de la machine-outil à l'arrêt au moment de l'ouverture d'une paroi de la cabine,
caractérisée
en ce qu'au moins des parties des parois latérales (11, 12) sont montées, de manière à obtenir une possibilité d'écartement latéral limité, sur des éléments (27; 47) capables de céder élastiquement ou sur des leviers pivotants (52), et
en ce qu'il est prévu des interrupteurs d'arrêt d'urgence distincts (18, 30, 49) qui, en présence d'un mouvement d'écartement latéral d'une partie de paroi latérale (11, 12; 21) provoqué par une collision avec une pièce abloquée, mettent à l'arrêt l'entraînement d'avance de la table porte-pièce (4).

2. Cabine selon la revendication 1, dans laquelle des parties des parois de la cabine sont formées par des fenêtres, caractérisée en ce que les fenêtres (21) sont tenues à la partie restante de la paroi latérale (11; 12) par des éléments (47) capables de céder élastiquement.

3. Cabine selon la revendication 1, caractérisée en ce que, de chaque côté, est fixé un rail de guidage horizontal supérieur (17) à profil en C, dans lequel sont guidés au moins deux galets de roulement biconiques (19) placés à un certain espacement horizontal, dont les axes de portée (25) sont montés, par l'intermédiaire d'éléments (27) capables de céder élastiquement, sur le segment terminal supérieur de la paroi latérale correspondante (10, 11) de façon à pouvoir se déplacer axialement par rapport à cette paroi.

4. Cabine selon la revendication 3, caractérisée en ce que plusieurs interrupteurs à poussoir (30) sont fixés à la poutre (15) du rail de guidage (17) et à ce qu'à chacun de ces interrupteurs, est associé un poussoir (29) fixé au segment supérieur de la paroi latérale (11) qui est suspendu pour osciller dans une mesure limitée.

5. Cabine selon la revendication 3 ou la revendication 4, caractérisée en ce que chaque axe (25) de galet de roulement est fixé à la paroi latérale (10, 11) par l'intermédiaire d'une patte élastique (27) qui constitue l'élément élastique.

6. Cabine selon une quelconque des revendications 3 à 5, caractérisée en ce que chaque axe de galet de roulement (25) présente une gorge annulaire arrondie (33) dans laquelle sont engagées élastiquement des presseurs (34, 35) à tête arrondie qui sont fixés à la paroi latérale (10, 11).

7. Cabine selon une quelconque des revendications 3 à 6, caractérisée en ce qu'au bord inférieur de la paroi latérale (10, 11) sont prévus au moins deux galets de roulement (1) à axe de portée vertical.

8. Cabine selon la revendication 7, caractérisée en ce que les axes (25) des galets de roulement sont fixés dans des blocs d'articulation dans lesquels est tourillonné un axe d'articulation et en ce que le levier pivotant (52) est relié, d'une part, à cet axe d'articulation, et d'autre part, à un axe d'articulation porté par la partie de paroi (11).

9. Cabine selon la revendication 1 ou la revendication 8, caractérisée en ce que les leviers pivotants sont réalisés sous la forme de leviers (52a, 52b) d'une genouillère.

Fig.1

Fig. 2

Fig. 3

# Fig.4

a)

b)

# Fig.5